# EUROPEAN PATENT APPLICATION

(11) **EP 3 611 244 A1**
(43) Date of publication of application: **19.02.2020**
(21) Application number: 18805914.1
(22) Date of filing: 15.05.2018
(51) Int. Cl.: C10M 173/02, C10M 107/34, C10M 169/04, B64F 5/10, C10M 129/40, C10M 131/08, C10M 131/12, C10M 133/04, C10M 133/06, C10M 135/08, C10M 135/10, C10N 20/00, C10N 20/02, C10N 40/22

(54) **LIQUID FORMULATION FOR PROCESSING MACHINE**

(30) Priority: 25.05.2017 JP 2017103528
(71) Applicant: Mitsubishi Heavy Industries, Ltd., Chiyoda-ku, Tokyo 1008332 (JP); Moresco Corporation, Kobe-shi, Hyogo 650-0047 (JP)
(72) Inventor: IENAGA Hirofumi, Tokyo 108-8215 (JP); TAKEUCHI Taro, Tokyo 108-8215 (JP); INAGAKI Hidekazu, Kobe-shi Hyogo 650-0047 (JP)
(74) Representative: Henkel & Partner mbB
(86) International application number: PCT/JP2018/018823
(87) International publication number: WO 2018/216559

(57) **Abstract**

A solution for processing machines includes a lubricating base including polyalkylene glycol, a fluorine-based surfactant or a cationic surfactant, and water. The lubricating base includes at least one of a polyoxyethylene/polyoxypropylene reverse block, an ethylenediamine polyoxyalkylene condensate, polyoxyethylene polyoxypropylene glycol, and an ethylene oxide propylene oxide polymer, as polyalkylene glycol.

## Description

### TECHNICAL FIELD

The present invention relates to a solution for processing machines, which is used at the time of processing a stacked material of a fiber reinforcement composite material for planes and/or a metal material.

Priority is claimed on Japanese Patent Application No. 2017-103528, filed on May 25, 2017, the content of which is incorporated herein by reference.

### BACKGROUND ART

When performing mechanical processing such as perforating, cutting, and grinding, tools such as a drill and an end mill that perform a predetermined mechanical processing are used. The tools are installed in a processing machine. The processing machine performs mechanical processing on a processing subject by rotating a tool around a central axis.

In a case where mechanical processing is performed using a tool in a processing machine, a solution for processing machines which is called a cutting oil and the like is provided between the tool and the processing subject. The solution for processing machines enhances processability by lubricating a gap between a tool and a processing subject and decreasing a frictional force generated between the tool and the processing subject. In addition, the solution for processing machines suppresses an increase in temperatures of the tool and the processing subject due to a frictional heat between the tool and the processing subject.

The solution for processing machines includes an oily solution for processing machines having an oil as a main component (for example, refer to Patent Document 1) and an aqueous solution for processing machines using a surfactant and a lubricating component by diluting thereof with water. The oily solution for processing machines is excellent in lubricating properties, compared with the aqueous solution for processing machines. The aqueous solution for processing machines is excellent in cooling properties, compared with the oily solution for processing machines. For this reason, depending on desired properties at the time of processing, among lubricating properties, cooling properties, and the like, the solution for processing machines to be used is selected.

In a case where the processing subject is a carbon fiber composite material, a method of using a solution depending thereon (for example, refer to Patent Document 2) is known. However, in a case where the processing subject becomes a stacked material including the carbon fiber composite material, processing surface accuracy becomes insufficient with the solution, and application of the solution to this processing becomes difficult.

In addition, in a case where the processing subject is a titanium material, as a processing technique, a technique of an emulsion type cutting oil solution (for example, refer to Patent Document 3) in which fatty acid ester, a mineral oil, and the like are mixed with one another is known.

### Citation List

### Patent Literature

[Patent Document 1] Japanese Unexamined Patent Application, First Publication No. 2008-163115
[Patent Document 2] Japanese Unexamined Patent Application, First Publication No. 2012-250341
[Patent Document 3] Japanese Unexamined Patent Application, First Publication No. 2011-111593

### SUMMARY OF INVENTION

### Technical Problem

However, in the oil solution, in a case where a processing subject is made of a stacked material of a titanium material and a composite material, application of the oily solution to this processing is difficult due to problems of interlayer exfoliation, residues, and surface accuracy. In addition, depending on the processing content to be performed, if any one of the oily solution for processing machines and the aqueous solution for processing machines is selected, there is a case where all properties required for a solution for processing machines cannot be satisfied.

For example, in a state in which a member made of a carbon fiber reinforcement resin and the like and a metal material such as aluminum and a titanium alloy are stacked, in a case where mechanical processing such as perforating is performed, high lubricating properties, cooling properties, and washing properties are required.

In addition, after processing, in removing an oily solution for processing machines, washing using a solution and the like is necessary and labor is required.

The solution for processing machines most suitable for use at the time of processing a stacked material of a fiber reinforcement composite material for planes and/or a metal material does not exist at the present.

The present invention has been made in consideration of the circumstances and an object of the present invention is to provide a solution for processing machines having high lubricating properties, cooling properties, and washing properties which is used at the time of processing a stacked material of a fiber reinforcement composite material for planes and/or a metal material.

### Solution to Problem

In order to solve the above problems, the present invention employs the following means.

In a first aspect of the present invention, a solution for processing machines includes a lubricating base including polyalkylene glycol; a fluorine-based surfactant or a cationic surfactant; and water.

According to such a composition, the solution for processing machines is made of an aqueous solution including a lubricating base including polyalkylene glycol and a fluorine-based surfactant or a cationic surfactant. Such a solution for processing machines exhibits high cooling properties while having high lubricating properties due to a lubricating base including polyalkylene glycol. In addition, due to the fluorine-based surfactant or the cationic surfactant and water, high washing properties are obtained.

In a second aspect of the present invention, the lubricating base in the first aspect includes at least one of a polyoxyethylene/polyoxypropylene reverse block, an ethylenediamine polyoxyalkylene condensate, polyoxyethylene polyoxypropylene glycol, and an ethylene oxide propylene oxide polymer, as polyalkylene glycol.

In a third aspect of the present invention, the fluorine-based surfactant in the first or second aspect includes at least one of a fluorine-containing group/hydrophilic group/lipophilic group-containing oligomer, perfluoroalkyl group-containing carboxylate, and perfluorobutane sulfonate.

In a fourth aspect of the present invention, the cationic surfactant in the first or second aspect includes at least one of octyldimethylethylammonium ethyl sulfate, stearyl dimethylhydroxyethylammonium paratoluenesulfonate, stearyl dimethylaminopropylamine, didecyl dimethylammonium chloride, and tetraalkylammonium carboxylate.

According to a fifth aspect of the present invention, in the first to fourth aspects, at least one fatty acid of isononanoic acid and nonanoic acid is further included.

According to a sixth aspect of the present invention, in the first to fifth aspects, at least one amine of triethanolamine and 1.3 bisaminocyclohexane is included.

According to a seventh aspect of the present invention, in the first to sixth aspects, the surface tension measured in an environment of 20.5°C is 24 mN/m or less.

According to an eighth aspect of the present invention, in the first to seventh aspects, kinematic viscosity measured in an environment of 25°C is 0.95 mm²/s or more.

According to a ninth aspect of the present invention, in the first to eighth aspects, pH is 6 to 9.

### Advantageous Effects of Invention

According to a solution for processing machines according to the present invention, it is possible to have high lubricating properties, cooling properties, and washing properties.

### BRIEF DESCRIPTION OF DRAWINGS

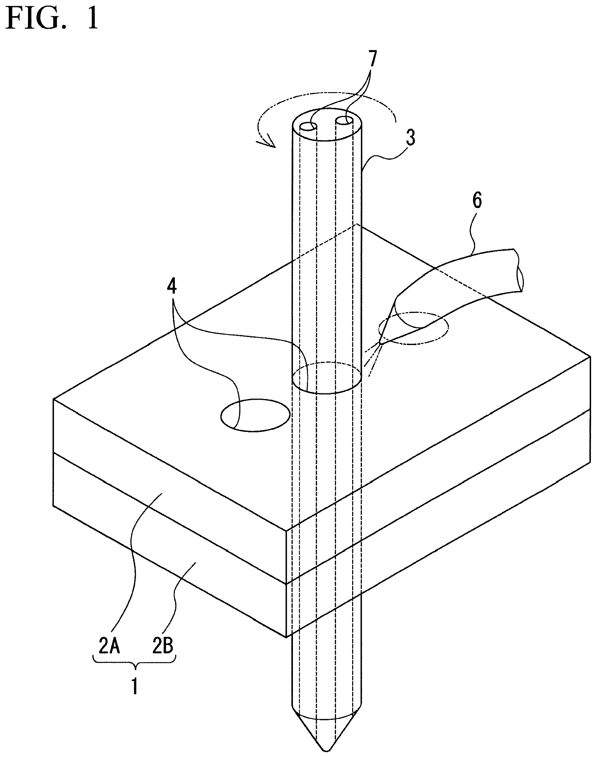

FIG. 1 is a perspective view showing an example of mechanical processing performed using a solution for processing machines according to an embodiment of the present invention.

### DESCRIPTION OF EMBODIMENTS

Hereinafter, a solution for processing machines according to an embodiment of the present invention will be described.

FIG. 1 is a perspective view showing an example of mechanical processing performed using a solution for processing machines according to an embodiment of the present invention.

As shown in FIG. 1, the solution for processing machines of the embodiment, for example, is used at the time of performing drilling processing with a tool 3 on a processing subject 1.

The processing subject 1 is, for example, made by stacking a first member 2A and a second member 2B.

The first member 2A is, for example, formed by a fiber reinforcement resin material formed of a reinforcement fiber such as carbon fiber and glass fiber and a resin such as an epoxy resin and a urethane resin.

The second member 2B is, for example, formed by a metal material such as titanium alloy, aluminum alloy, stainless alloy, and nickel alloy.

In addition, the first member 2A and the second member 2B can be, for example, formed by a ceramic material, a glass material, and the like.

Here, in the processing subject 1, combination of materials of the first member 2A and the second member 2B or shapes of the first member 2A and the second member 2B are not limited. For example, in members constituting planes, the first member 2A such as outer skin made of a fiber reinforcement resin material is fastened to the second member 2B such as a bracket made of a metal material, and thus in a state of stacking the first member 2A and the second member 2B, a hole 4 may be formed.

The tool 3 is, for example, a drill for boring the hole 4 in the processing subject 1. Depending on the processing content, the tool 3 may be an end mill, a cutter, various milling cutters, and the like, for example, in addition to the drill.

Such a tool 3 is installed in a processing head of a processing machine (not shown) and rotationally operates around a central axis of the tool 3.

In order to drill the processing subject 1 with the tool 3, the solution for processing machines is provided with respect to a processing portion in which the tool 3 is in contact with the processing subject 1. Provision of the solution for processing machines can be performed by a nozzle 6 through which the solution for processing machines is discharged or sprayed with respect to a contact portion between the tool 3 and the processing subject 1, for example. In addition, provision of the solution for processing machines can be performed through a liquid flow path 7 which is formed in the tool 3 and extends in a central axis direction of the tool 3. The liquid flow path 7 has an opening (not shown) in a tip end portion or am outer peripheral surface of the tool 3, and the solution for processing machines is discharged from the opening.

Subsequently, a solution for processing machines according to the present embodiment will be described.

The solution for processing machines includes a lubricating base including polyalkylene glycol, a fluorine-based surfactant or cationic surfactant, and water.

The lubricating base including polyalkylene glycol preferably includes at least one of polyoxyethlyene/polyoxypropylene reverse block, an ethylene diamine polyoxy alkylene condensate, polyoxyethylene polyoxypropylene glycol, and an ethylene oxide propylene oxide polymer.

Such a lubricating base preferably includes 5 to 95 wt% in the solution for processing machines.

A more preferable range of the amount of the lubricating base is 30 to 90 wt%.

The fluorine-based surfactant preferably includes at least one of a fluorine-containing group/hydrophilic group/lipophilic group-containing oligomer, perfluoroalkyl group-containing carboxylate, and perfluorobutane sulfonate.

The cationic surfactant preferably includes at least one of octyldimethylethylammonium ethyl sulfate, stearyl dimethylhydroxyethylammonium paratoluenesulfonate, stearyl dimethylaminopropylamine, didecyl dimethylammonium chloride, and tetraalkylammonium carboxylate.

The fluorine-based surfactant or cationic surfactant preferably includes 0.1 to 15 wt%, for example in the solution for processing machines. A preferable range of the amount of the fluorine-based surfactant or cationic surfactant is 0.1 to 10 wt%.

The solution for processing machines may further include a fatty acid. The fatty acid preferably includes at least one of isononanoic acid and nonanoic acid.

In the solution for processing machines, 3 to 25 wt% of the fatty acid is preferably included, for example. A more preferable range of the amount of the lubricating base is 5 to 20 wt%.

In addition, the solution for processing machines may further include amine. The amine preferably includes at least one of triethanolamine and 1.3 bisaminocyclohexane.

In the solution for processing machines, 3 to 15 wt% of the amine is preferably included. A more preferable range of the amount of the amine is 5 to 10 wt%.

The solution for processing machines is formed by dissolving the above-described materials in water. That is, in the solution for processing machines, the residue of the above-described materials is water.

The above-described solution for processing machines preferably lowers surface tension to enhance permeability into a processing portion. The solution for processing machines is preferably generated such that surface tension measured in an environment of 20.5°C is 24 mN/m or less, for example.

By lowering surface tension of the solution for processing machines, it is possible to facilitate invasion into a boundary friction point between a tool and a processing subject. With this, in the vicinity of a generation source of frictional heat, it is possible to efficiently absorb the frictional heat from the tool and the processing subject.

In addition, it is preferable that kinematic viscosity of the solution for processing subject becomes high. The solution for processing machines is preferably such that the kinematic viscosity measured in an environment of 25°C is 0.95 mm²/s or more, for example.

By enhancing kinematic viscosity of the solution for processing machines, a film thickness of the solution for processing machines between the tool and the processing subject is ensured. With this, it is possible to suppress direct contact of the tool and the processing subject and stabilize friction generated in the processing portion.

In addition, the solution for processing machines is preferably such that variation of friction coefficient is small. Due to variation of friction coefficient, a change in a friction amount in the tool surface becomes large, and abnormal abrasion such as boundary abrasion is caused. For this reason, the solution for processing machines is preferably such that the variation of the friction coefficient with a metal material is generated to be 0.010 to 0.018.

By suppressing the variation of the friction coefficient due to the solution for processing machines, it is possible to suppress abrasion of the tool and to enhance processing efficiency.

In addition, in a case where the processing subject 1 is formed by using an aluminum alloy, for example, the solution for processing machines preferably has a neutral pH of 6 to 9. With this, the aluminum alloy is stabilized.

In addition, such a solution for processing machines is formed by a water-soluble hydrophilic material. With this, after processing the processing subject 1 by using the solution for processing machines, it is possible to easily wash the solution for processing machines using water. Therefore, for example, it is not necessary to perform washing by using a solution such as methylethyl ketone, and it is possible to mitigate environmental impact and load on a worker.

The above-described solution for processing machines is an aqueous solution including a lubricating base including polyalkylene glycol and a fluorine-based surfactant or cationic surfactant. Such a solution for processing machines exhibits high cooling properties while having high lubricating properties. In addition, since the solution for processing machines is water-soluble, after processing, it is possible to easily perform washing by not using a solution but flushing with water.

In the embodiment, as the lubricating base including polyalkylene glycol and the fluorine-based surfactant or cationic surfactant, which constitute the solution for processing machines, a plurality of substances are specifically exemplified, respectively, and only one kind of substances may be used, or two or more kinds of substances may be used in combination, respectively.

In addition, it is also possible to generate a solution for processing machines by adding additives other than the above-described additives.

The present invention is not limited to the above-described embodiment, and includes embodiments to which various modifications are added within a range not departing the gist of the present invention. That is, specific shapes or constitutions exemplified in the embodiment are merely examples and can be appropriately modified.

For example, in the embodiment, the solution for processing machines is such that, as shown in FIG. 1, perforating processing is performed with the tool 3 on the processing subject 1 in which the first member 2A made of a fiber reinforcement resin material and the second member 2B made of a metal material are stacked, but is not limited thereto. That is, the material or the use of the processing subject 1, the amount of processing with the tool 3, and the like may be different from those shown in the embodiment.

Subsequently, examples of the solution for processing machines according to the present invention will be described.

### Examples

### (Examples 1 to 19)

A solution for processing machines was generated by using materials shown in Tables 1 and 2. Here, the number of each substance in tables indicates the amount (wt%) of the solution for processing machines.

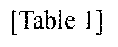

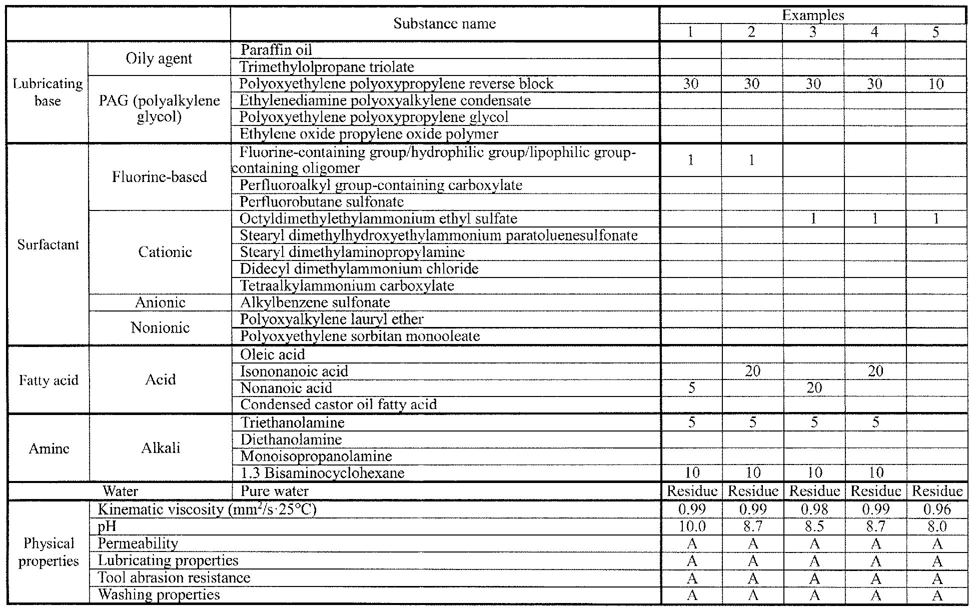

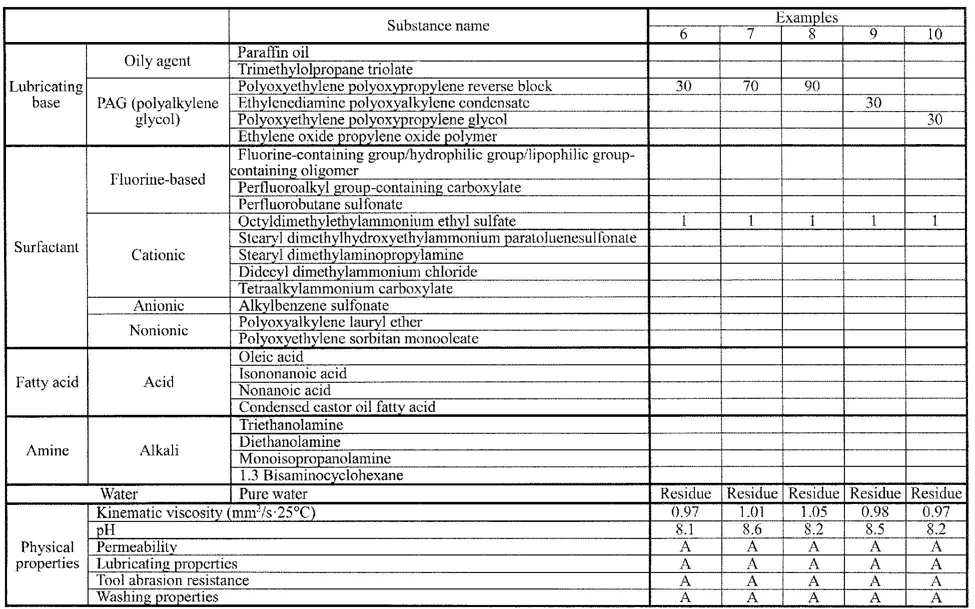

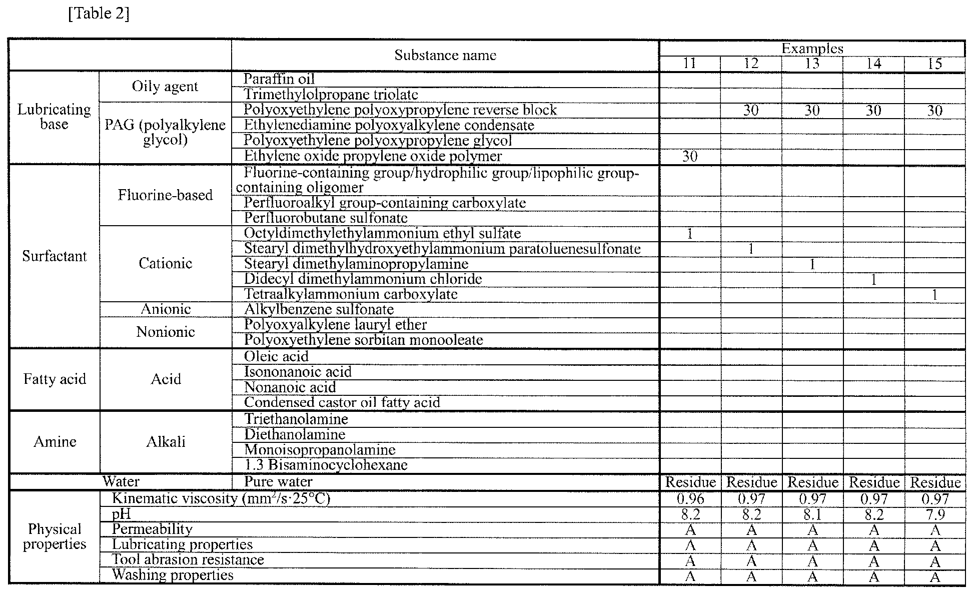

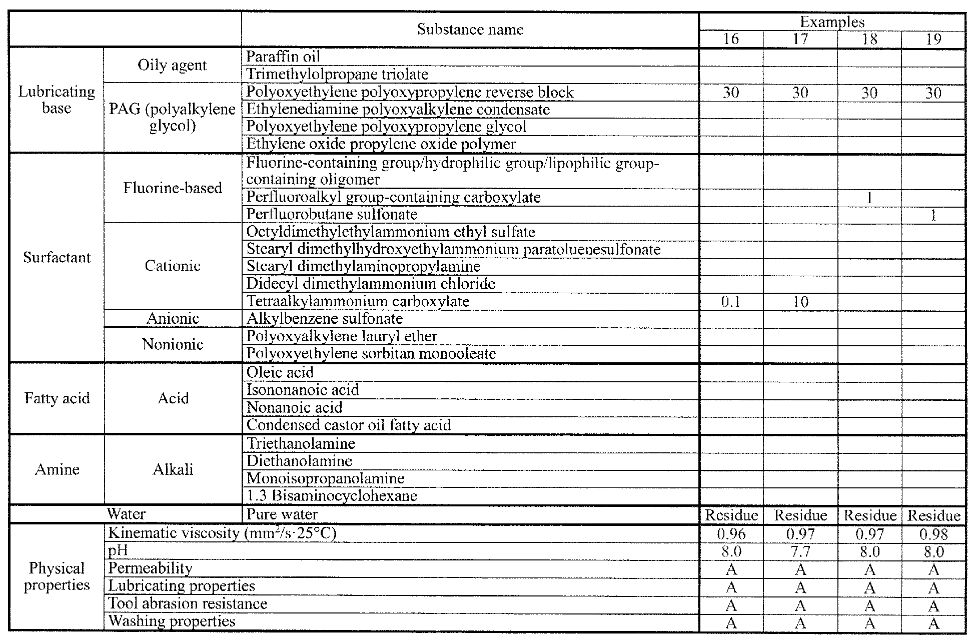

In Examples 1 to 19, as a lubricating base, one of polyoxyethylene/polyoxypropylene reverse block (material (product) name: ADEKA Pluronic 17R4, manufactured by ADEKA), ethylenediamine polyoxyalkylene condensate (material name: ADEKA Pluronic TR-913R, manufactured by ADEKA), polyoxyethylene polyoxypropylene glycol (material name: EPAN450, manufactured by DKS Co., Ltd.), and ethylene oxide propylene oxide polymer (material name: Synative RPE1720, manufactured by BASF), which is polyalkylene glycol, was used.

In addition, in Examples 1 to 4, 6, and 9 to 19, the amount of the lubricating base was set as 30 wt%, and in Examples 5, 7, and 8, the amount of the lubricating base was differentiated as 10, 70, and 90 wt%.

In addition, in Examples 1, 2, 18, and 19, as a surfactant, one of fluorine-containing group/hydrophilic group/lipophilic group-containing oligomer (material name: F477, manufactured by DIC Corporation), perfluoroalkyl group-containing carboxylate (material name: F410, manufactured by DIC Corporation), and perfluorobutane sulfonate (material name: FC-4430, manufactured by 3M Corporation), which is a fluorine-based surfactant, was included.

In Examples 3 to 17, as a surfactant, one of octyldimethylethylammonium ethyl sulfate (material name: ES-O, manufactured by DKS Co., Ltd.), stearyl dimethylhydroxyethylammonium paratoluenesulfonate (material name: Catiogen D2, manufactured by DKS Co., Ltd.), stearyl dimethylaminopropylamine (material name: Catiogen SPA, manufactured by DKS Co., Ltd.), didecyl dimethyl ammonium chloride (material name: Pionin B0011, manufactured by TAKEMOTO Oil and Fat Co., Ltd.) and tetraalkylammonium carboxylate (material name: Osmoline DA50, manufactured by Sanyo Chemical Industries Ltd.), which is a cationic surfactant, was used.

An additive amount of the surfactant was 1 wt% in Examples 1 to 15, 18, and 19, and was 0.1 and 10 wt%, respectively, in Examples 16 and 17.

In addition, in Examples 1 to 4, one of isononanoic acid and nonanoic acid, which is a fatty acid (acid), was added. The additive amount of the fatty acid was 5 wt% in Example 1 and was 20 wt% in Examples 2 to 4.

In addition, in Examples 1 to 4, triethanolamine and 1.3 bisaminocyclohexane, which are amine (alkali), were added. The additive amount of triethanolamine was 5 wt% and the additive amount of 1.3 bisaminocyclohexane was 10 wt%.

In addition, in Examples 1 to 19, the residue of the substances was pure water, and the substances were mixed with pure water.

### (Comparative Examples 1 to 4)

For comparison, Comparative Examples 1 to 4 as shown in Table 3 were used.

**[Table 3]**

| | | Substance name | Comparative Examples | | | |
|---|---|---|---|---|---|---|
| | | | 1 | 2 | 3 | 4 |
| Lubricating base | Oily agent | Paraffin oil | | | | 40 |
| | | Trimethylolpropane triolate | 15 | 15 | | |
| | PAG (polyalkylene glycol) | Polyoxyethylene polyoxypropylene reverse block | | | 30 | |
| | | Ethylenediamine polyoxyalkylene condensate | | | | |
| | | Polyoxyethylene polyoxypropylene glycol | | | | |
| | | Ethylene oxide propylene oxide polymer | | | | |
| Surfactant | Fluorine-based | Fluorine-containing group/hydrophilic group/lipophilic group-containing oligomer | | 1 | | |
| | | Perfluoroalkyl group-containing carboxylate | | | | |
| | | Perfluorobutane sulfonate | | | | |
| | Cationic | Octyldimethylethylammonium ethyl sulfate | | | | 1 |
| | | Stearyl dimethylhydroxyethylammonium paratoluenesulfonate | | | | |
| | | Stearyl dimethylaminopropylamine | | | | |
| | | Didecyl dimethylammonium chloride | | | | |
| | | Tetraalkylammonium carboxylate | | | | |
| | Anionic | Alkylbenzene sulfonate | | | | |
| | Nonionic | Polyoxyalkylene lauryl ether | 10 | 10 | | 10 |
| | | Polyoxyethylene sorbitan monooleate | | | | |
| Fatty acid | Acid | Oleic acid | | | | 10 |
| | | Isononanoic acid | | | | |
| | | Nonanoic acid | | | 5 | |
| | | Condensed castor oil fatty acid | 15 | 15 | 5 | |
| Amine | Alkali | Triethanolamine | | | 5 | 15 |
| | | Diethanolamine | | | | |
| | | Monoisopropanolamine | 15 | 15 | | |
| | | 1.3 Bisaminocyclohexane | | | 10 | |
| Water | | Pure water | Residue | Residue | Residue | Residue |
| Physical properties | Kinematic viscosity (mnrVs_{'}25°C) | | 0.94 | 0.94 | 0.98 | 0.95 |
| | pH | | 10.4 | 10.4 | 9.7 | 9.4 |
| | Permeability | | B | B | c | B |
| | Lubricating properties | | C | C | A | C |
| | Tool abrasion resistance | | C | B | C | C |
| | Washing properties | | C | C | C | C |

In Comparative Examples 1 and 2, as a lubricating base, trimethylolpropane triolate, which is an oily agent, was used. The additive amount was 15 wt%. In Comparative Examples 1 and 2, further, as a surfactant, nonionic polyoxyalkylene laurylether (material name: NL-DASH403, manufactured by DKS Co., Ltd.) was added in an amount of 10 wt%, a condensed castor oil fatty acid, which is a fatty acid, was added in an amount of 15 wt%, and monoisopropanolamine, which is amine, was added in an amount of 15 wt%. In addition, in Example 2, as a surfactant, a fluorine-containing group/hydrophilic group/lipophilic group-containing oligomer, which is a fluorine-based surfactant, was added in an amount of 1 wt%.

In Comparative Example 3, as a lubricating base, similar to Examples 1 to 8 and 12 to 19, a polyoxyethylene polyoxypropylene reverse block (material name: ADEKA Pluronic 17R4, manufactured by ADEKA), which is polyalkylene glycol, was used. The additive amount was 30 wt%. In Comparative Example 3, a surfactant was not added, a nonanoic acid, which is a fatty acid, was added in an amount of 5 wt%, a condensed castor oil fatty acid was added in an amount of 5 wt%, triethanolamine, which is amine (alkali), was added in an amount of 5 wt%, and 1.3 bisaminocyclohexane was added in an amount of 10 wt%.

In Comparative Example 4, as a lubricating base, paraffin, which is an oily agent, was used. The additive amount was 40 wt%. In Comparative Example 4, as a surfactant, one of octyldimethylethylammonium ethyl sulfate (material name: ES-O, DKS Co., Ltd.), which is a cationic surfactant, was added in an amount of 1 wt%, and nonionic polyoxyalkylene laurylether (material name: NL-DASH403, DKS Co., Ltd.) was added in an amount of 10 wt%. Further, in Comparative Example 4, an oleic acid, which is a fatty acid, was added in an amount of 10 wt%, and triethanolamine, which is amine, was added in an amount of 15 wt%.

In addition, in Comparative Examples 1 to 4, the residue of the substances was pure water, and the substances were mixed with pure water.

### (Evaluation of physical properties of Examples and Comparative Examples)

Subsequently, physical properties of Examples 1 and 19 and Comparative Examples 1 to 4 were respectively evaluated. As physical properties used in evaluation, 6 items of kinematic viscosity, pH, permeability, lubricating properties, tool abrasion resistance, and washing properties were selected. The results are shown in Tables 1 to 3.

Kinematic viscosity was measured in an environment of 25°C.

As a result, in any of Examples 1 to 19, a kinematic viscosity was 0.95 mm²/s or more.

On the contrary, in Comparative Example 3 in which a polyoxyethylene polyoxypropylene reverse block, which is polyalkylene glycol, was used as a lubricating base, a kinematic viscosity was 0.98 mm²/s. However, in Comparative Examples 1, 2, and 4 in which trimethylolpropane triolate, which is an oily agent, and paraffin oil were used as lubricating bases, a kinematic viscosity was less than 0.95 mm²/s.

In any of Examples 1 to 19 and Comparative Examples 1 to 4, pH was measured by diluting the solution for processing machines produced 20 times.

As a result, in any of Examples 2 to 19, pH was 7.7 to 8.7, which was neutral. Among Examples 1 to 4 in which a fatty acid and amine are added, in Example 1 in which the additive amount of the fatty acid with respect to amine is small, pH was 10 compared with Examples 2 to 4. From this, in a case where a fatty acid and amine are added, it is preferable to adjust the additive amount such that pH is within an appropriate range.

Permeability was evaluated by measuring surface tension. If surface tension is small, permeability into a gap between a tool and a processing subject is high. Surface tension was measured in an environment of 20.5°C. In Tables 1 to 3, "A" indicated that surface tension is 24 mN/m or less, "B" indicated that surface tension is 25 to 34 mN/m, and "C" indicated that surface tension is 35 mN/m or more.

As a result, it was confirmed that, in any of Examples 1 to 19, surface tension is 24 mN/m or less and permeability is favorable.

On the contrary, in any of Comparative Examples 1 to 4, surface tension was large, and permeability was low compared to Examples 1 to 19.

Lubricating properties was evaluated by variation of friction coefficient. In Tables 1 to 3, "A" indicated that variation of friction coefficient is 0.02 or less, and "C" indicated that variation of friction coefficient is 0.03 or more.

Here, the variation of friction coefficient was obtained by measuring average friction coefficient with a tester using ball on plate and being calculated from the standard deviation σ.

The measurement conditions are as follows.
- Plate: Ti6al4V (plate material of 28 × 18 × 0.1 mm)
- Ball: SUJ-23/16 inches
- Load: 500g
- Period: 30 times/minutes
- Reciprocating stroke: 5 mm
- Test time: 10 minutes
- Temperature: room temperature (15°C to 25°C)
- Sample concentration: 5 wt% (diluted with water)
- Sample amount: 5 ml

As a result, it was confirmed that, in any of Examples 1 to 19, variation of friction coefficient was 0.02 or less, and lubricating properties were favorable.

On the contrary, in Comparative Example 3 in which a polyoxyethylene polyoxypropylene reverse block, which is polyalkylene glycol, was used as a lubricating base, variation of friction coefficient was small, while in Comparative Examples 1, 2, 4 other than Comparative Example 3, the variation was large.

Regarding tool abrasion resistance, a hole was made in a processing subject with a tool, in actual. When a hole was sequentially and continuously made with the same tool, the number of cases was counted where a hole with a predetermined diameter and a predetermined surface state was formed without abrasion of the tool. In Tables 1 to 3, "A" indicated that the number of holes continuously formed was 10 or more, "B" indicated that the number of holes continuously formed was 5 to 9, and "C" indicated that the number of holes continuously formed was 4 or less.

As a result, in any of Examples 1 to 19, it was possible to continuously process and form 10 or more holes, and thus it was possible to realize high tool abrasion resistance by using a solution for processing machines.

On the contrary, in any of Comparative Examples 1 to 4, it was possible to continuously form only 9 or less holes.

Regarding washing properties, after washing a tool and a processing subject, on which processing was performed while providing a solution for processing machines, with water for a predetermined time, presence or absence of stickiness was checked by touching the tool and the processing subject with a hand. "A" indicated a case where the solution for processing machines was not left and stickiness was not present on the surface of the tool or processing subject, and "C" indicated a case where the solution for processing machines was left and stickiness was present on the surface of the tool or processing subject.

As a result, in any of Examples 1 to 19, stickiness was not left, and it was possible to remove a solution for processing machines by only performing washing with water.

On the contrary, in any of Comparative Examples 1 to 4, stickiness was left, and it was not possible to remove a solution for processing machines by only performing washing with water.

From the above-described evaluation of physical properties, in Examples 1 to 19, it was confirmed that all of physical properties of kinematic viscosity, pH, permeability, lubricating properties, tool abrasion resistance, and washing properties are favorable.

### Industrial Applicability

The present invention is appropriately applicable to a solution for processing machines used at the time of processing a stacked material of a fiber reinforcement composite material for planes and/or a metal material.

### Reference Signs List

- 1: Processing subject
- 2A: First member
- 2B: Second member
- 3: Tool
- 4: Hole
- 6: Nozzle
- 7: Liquid flow path

## Claims

1. A solution for processing machines used at the time of processing a stacked material of a fiber reinforcement composite material and/or a metal material, the solution for processing machines, comprising:
a lubricating base including polyalkylene glycol;
a fluorine-based surfactant or a cationic surfactant; and
water.

2. The solution for processing machines according to Claim 1,
wherein the lubricating base includes at least one of a polyoxyethylene/polyoxypropylene reverse block, an ethylenediamine polyoxyalkylene condensate, polyoxyethylene polyoxypropylene glycol, and an ethylene oxide propylene oxide polymer, as polyalkylene glycol.

3. The solution for processing machines according to Claim 1 or 2,
wherein the fluorine-based surfactant includes at least one of a fluorine-containing group/hydrophilic group/lipophilic group-containing oligomer, perfluoroalkyl group-containing carboxylate, and perfluorobutane sulfonate.

4. The solution for processing machines according to Claim 1 or 2,
wherein the cationic surfactant includes at least one of octyldimethylethylammonium ethyl sulfate, stearyl dimethylhydroxyethylammonium paratoluenesulfonate, stearyl dimethylaminopropylamine, didecyl dimethylammonium chloride, and tetraalkylammonium carboxylate.

5. The solution for processing machines according to any one of Claims 1 to 4, further comprising:
at least one fatty acid of isononanoic acid and nonanoic acid.

6. The solution for processing machines according to any one of Claims 1 to 5, further comprising:
at least one amine of triethanolamine and 1.3 bisaminocyclohexane.

7. The solution for processing machines according to any one of Claims 1 to 6, wherein a surface tension measured in an environment of 20.5°C is 24 mN/m or less.

8. The solution for processing machines according to any one of Claims 1 to 7, wherein a kinematic viscosity measured in an environment of 25°C is 0.95 mm²/s or more.

9. The solution for processing machines according to any one of Claims 1 to 8, wherein pH is 6 to 9.

## Amended claims

### Amended claims under Art. 19.1 PCT

1. (currently amended) A solution for processing machines used at the time of processing a stacked material of a fiber reinforcement composite material and/or a metal material, the solution for processing machines, comprising:
a lubricating base including polyalkylene glycol;
a fluorine-based surfactant or a cationic surfactant;
water;
at least one fatty acid of isononanoic acid and nonanoic acid; and
at least one amine of triethanolamine and 1.3 bisaminocyclohexane; and
the solution for processing machines comprises 5 to 95 wt% of the lubricating base, 0.1 to 15 wt% of the surfactant, 3 to 25 wt% of the fatty acid, and 3 to 15 wt% of the amine.

2. The solution for processing machines according to Claim 1,
wherein the lubricating base includes at least one of a polyoxyethylene/polyoxypropylene reverse block, an ethylenediamine polyoxyalkylene condensate, polyoxyethylene polyoxypropylene glycol, and an ethylene oxide propylene oxide polymer, as polyalkylene glycol.

3. The solution for processing machines according to Claim 1 or 2,
wherein the fluorine-based surfactant includes at least one of a fluorine-containing group/hydrophilic group/lipophilic group-containing oligomer, perfluoroalkyl group-containing carboxylate, and perfluorobutane sulfonate.

4. The solution for processing machines according to Claim 1 or 2,
wherein the cationic surfactant includes at least one of octyldimethylethylammonium ethyl sulfate, stearyl dimethylhydroxyethylammonium paratoluenesulfonate, stearyl dimethylaminopropylamine, didecyl dimethyl ammonium chloride, and tetraalkylammonium carboxylate.

5. (cancel)

6. (cancel)

7. (currently amended) The solution for processing machines according to any one of Claims 1 to 4,
wherein a surface tension measured in an environment of 20.5°C is 24 mN/m or less.

8. (currently amended) The solution for processing machines according to any one of Claims 1 to 4, and 7,
wherein a kinematic viscosity measured in an environment of 25°C is 0.95 mm²/s or more.

9. (currently amended) The solution for processing machines according to any one of Claims 1 to 4, 7 and 8,
wherein pH is 6 to 9.

Statement under Art. 19.1 PCT
Claim 1 in CLAIMS is amended as shown in the attachment. Specifically, "the solution for processing comprises at least one fatty acid of isononanoic acid and nonanoic acid and at least one amine of triethanolamine and 1.3 bisaminocyclohexane, and the solution for processing machines comprises 5 to 95 wt% of the lubricating base, 0.1 to 15 wt% of the surfactant, 3 to 25 wt% of the fatty acid, and 3 to 15 wt% of the amine" is added in Claim 1 before amendment. The contents added by the amendment are disclosed in the original Claim 5 and the original Claim 6, and [0026], [0029], [0030], and [0031] in the original description. In addition, Claim 5 and Claim 6 are deleted by the amendment of Claim 1. Claim 7 is amended so as to depend on any one of Claims 1 to 4. Claim 8 is amended so as to depend on any one of Claims 1 to 4, and Claim 7. Claim 9 is amended so as to depend on any one of Claims 1 to 4, 7 and 8.
